# FASCICULE DE BREVET EUROPEEN

(11) **EP 4 001 223 B1**
(45) Date de publication et mention de la délivrance du brevet: **25.10.2023**
(21) Numéro de dépôt: 21208552.6
(22) Date de dépôt: 16.11.2021
(51) Int. Cl.: C02F 9/00, C02F 1/44, C02F 3/12, C02F 3/28, C02F 3/30, C02F 101/12, C02F 101/16

(54) **PROCÉDÉ DE TRAITEMENT BIOLOGIQUE DU PERCHLORATE D'AMMONIUM AVEC MUTUALISATION DE LA MICROFILTRATION**
VERFAHREN ZUR BIOLOGISCHEN AUFBEREITUNG VON AMMONIUMPERCHLORAT MIT GEMEINSAMER MIKROFILTRATION
METHOD FOR BIOLOGICAL TREATMENT OF AMMONIUM PERCHLORATE WITH SHARING OF MICROFILTRATION

(30) Priorité: 18.11.2020 FR 2011719
(43) Date de publication de la demande: 25.05.2022
(73) Titulaire: ArianeGroup SAS, 78130 Les Mureaux (FR)
(72) Inventeur: MANO, Aurélie, 33510 ANDERNOS-LES-BAINS (FR)
(74) Mandataire: Brevalex

(56) Documents cités:
- EP-A1- 3 028 997

## Description

### DOMAINE TECHNIQUE

La présente invention concerne le domaine du traitement biologique d'une solution aqueuse contenant du perchlorate d'ammonium et plus particulièrement d'une solution aqueuse contenant du perchlorate d'ammonium issue du traitement des propergols.

En effet, la présente invention vise à fournir un procédé simple, facile de mise en oeuvre, respectueux de l'environnement et permettant d'obtenir, après traitement, un effluent de rejet présentant des capacités et performances d'abattement (diminution) du perchlorate satisfaisantes et des performances d'abattement conformes en termes de demande chimique en oxygène (DCO) et de matières en suspension (MES).

### ÉTAT DE LA TECHNIQUE ANTÉRIEURE

Les propergols composites solides sont des compositions énergétiques constituées d'une matrice macromoléculaire en polymère combustible, appelée liant, chargée d'un oxydant et d'un combustible. En général, cet oxydant et ce combustible se présentent respectivement sous forme solide pulvérulente et sous forme d'un métal pulvérulent.

Les propergols composites solides sont largement utilisés en aérospatiale dans les propulseurs d'appoint au décollage des lanceurs spatiaux ou dans les rétrofusées de sondes spatiales. Ils sont également utilisés dans les dispositifs du type « airbag » pour la sécurité automobile.

Le démantèlement des propulseurs ou des rétrofusées à propergol composite solide en retour de dotation est une problématique étudiée depuis plusieurs années. En effet, le retour des propulseurs et des rétrofusées entraîne la problématique de leur destruction. Il en est, de même, pour les déchets de production des propergols composites solides.

Une première méthode de destruction utilisée pour les propulseurs et les rétrofusées est leur mise au banc afin d'être tirés, permettant ainsi leur destruction. Cette dernière engendre une pollution atmosphérique, surtout lors des tirs des 1^{er} et 2^{nd} étages des propulseurs, compte tenu de la quantité importante de propergols composites solides à brûler.

Une seconde méthode couramment utilisée pour éliminer les propulseurs et rétrofusées à propergol composite solide ainsi que les déchets de production des propergols composites solides consiste à les brûler à l'air libre. La combustion à l'air libre est limitée par les conditions météorologiques et génère des produits de combustion qui sont une source de pollution atmosphérique.

D'autres méthodes plus respectueuses de l'environnement ont été développées et certaines impliquent un broyage sous eau des déchets à base de propergols composites solides.

Ainsi la demande de brevet FR 2 931 814 propose un procédé biologique pour purifier, avant leur rejet, des solutions aqueuses contenant du perchlorate d'ammonium et éventuellement des nitrates, obtenues suite à ce broyage. Ce procédé comprend une séquence de nitrification/dénitrification puis une étape de réduction des perchlorates suivie d'une microfiltration. Il n'est toutefois pas précisé, dans la demande de brevet FR 2931814, les technologies mises en oeuvre, suite à cette microfiltration et avant le rejet de l'effluent traité, pour l'abattement de la DCO et l'abattement en MES.

En pratique, sur un des sites où l'invention objet de la demande de brevet FR 2 931 814 est exploitée, l'abattement de la DCO est réalisé par des biodisques et l'abattement en MES par un décanteur lamellaire. Une autre technologie classiquement utilisée pour l'abattement de la DCO peut mettre en oeuvre un bassin à boues activées, sous agitation et aération.

En ce qui concerne l'abattement de la DCO avec bassin à boues activées, sous agitation et aération, ce dernier n'est pas satisfaisant car les bactéries présentent dans le bassin aéré ne sont pas suffisamment conservées. En effet, le processus en continu entraîne une perte de bactéries.

L'abattement en MES nécessite, quant à lui, d'avoir un appareillage dimensionné en fonction des caractéristiques des bactéries qu'il contient dans le but de conserver ces dernières dans l'appareillage. Par ailleurs, les décanteurs lamellaires utilisés pour l'abattement en MES nécessitent de l'entretien avec des soutirages réguliers à réaliser, de façon manuelle, en fonction des observations d'encrassement du décanteur. De tels décanteurs sont donc difficiles à mettre en oeuvre sur des sites ne disposant pas de surveillance à temps plein.

Les inventeurs se sont donc fixés pour but de proposer un procédé robuste, autonome, facile de mise en oeuvre et permettant de traiter, de façon biologique, une solution aqueuse contenant du perchlorate d'ammonium et éventuellement des ions nitrates dans le but d'obtenir un effluent de rejet conforme en termes d'abattement DCO et en MES tout en maintenant des capacités et performances d'abattement du perchlorate et des éventuels ions nitrates, comparables à celles des procédés de l'art antérieur. EP3028997 A1 divulgue un procédé de traitement d'eau contaminée par exemple avec des perchlorates.

### EXPOSÉ DE L'INVENTION

Pour ce faire, la présente invention propose un procédé pour traiter une solution aqueuse contenant du perchlorate d'ammonium et éventuellement des ions nitrates, ledit procédé présentant une séquence de nitrification/dénitrification puis une étape de réduction des perchlorates, l'effluent liquide obtenu à l'issue de cette étape de réduction des perchlorates étant soumis à une première filtration membranaire,
le perméat obtenu suite à cette première filtration membranaire étant mis en contact, dans un réacteur en conditions aérobies, avec des micro-organismes aptes à réaliser l'oxydation des matières organiques,
puis l'effluent liquide sortant de ce réacteur étant soumis à une seconde filtration membranaire,
la première étape de filtration membranaire et la seconde étape de filtration membranaire étant réalisées sur une même unité de filtration qui est un dispositif à l'extérieur des différents bioréacteurs.

Le procédé selon l'invention présente au moins une des caractéristiques optionnelles suivantes, prises isolément ou en combinaison.

L'unité de filtration membranaire mise en oeuvre lors de la première étape de filtration membranaire et de la seconde étape de filtration membranaire comprend une membrane de microfiltration et une cuve de perméat.

La membrane de microfiltration que comprend l'unité de filtration membranaire mise en oeuvre lors de la première étape de filtration membranaire et de la seconde étape de filtration membranaire est une membrane de microfiltration.

La membrane de microfiltration que comprend l'unité de filtration membranaire mise en oeuvre lors de la première étape de filtration membranaire et de la seconde étape de filtration membranaire est une membrane d'ultrafiltration.

La séquence de nitrification/dénitrification du procédé selon la présente invention comprend au moins une étape de nitrification en conditions aérobies, avec des bactéries nitrifiantes en présence d'un substrat carboné minéral et d'éléments nutritionnels suivie d'au moins une étape de dénitrification, en conditions anaérobies, avec des bactéries dénitrifiantes en présence d'un substrat carboné organique et d'éléments nutritionnels.

L'étape de réduction des perchlorates du procédé selon la présente invention met en oeuvre des bactéries choisies dans le groupe constitué par les bactéries appartenant à l'espèce *Exiguobacterium mexicanum,* les bactéries appartenant à l'espèce *Bacillus cereus,* les bactéries appartenant à l'espèce *Staphylococcus warneri,* les bactéries appartenant à l'espèce *Staphylococcus pasteuri* et un de leurs mélanges.

Le perméat obtenu à l'issue de la seconde étape de filtration membranaire est rejeté dans le milieu naturel.

### BRÈVE DESCRIPTION DES DESSINS

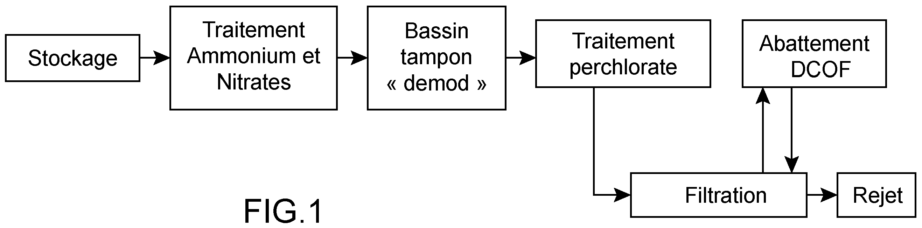

La Figure 1 est un diagramme schématisé du procédé de traitement d'une solution aqueuse contenant du perchlorate d'ammonium et éventuellement des ions nitrates selon la présente invention.

### EXPOSÉ DÉTAILLÉ DE MODES DE RÉALISATION PARTICULIERS

La présente invention propose un procédé de traitement d'une solution aqueuse contenant du perchlorate d'ammonium et éventuellement des ions nitrates permettant d'obtenir un effluent épuré en termes d'ammonium, de nitrates, de nitrites, de perchlorate, de matières organiques et de matières en suspension et donc un effluent apte à être rejeté en milieu naturel. Le procédé de traitement selon l'invention est donc un procédé de purification d'une solution aqueuse contenant du perchlorate d'ammonium et éventuellement des ions nitrates.

A l'issue du traitement selon la présente invention, la masse de perchlorate d'ammonium dans cet effluent épuré représente moins de 5%, moins de 3%, moins de 2%, moins de 1%, moins de 0,5%, moins de 0,1% de la masse de perchlorate d'ammonium initialement contenu dans la solution aqueuse à traiter. Typiquement, la concentration en perchlorate d'ammonium dans l'effluent épuré obtenu à l'issue du traitement selon l'invention est inférieure à 0,4 g/l d'effluent épuré, notamment inférieure à 0,3 g/l d'effluent épuré, en particulier inférieure à 0,2 g/l d'effluent épuré, plus particulièrement, inférieure à 0,1 g/l et, tout particulièrement, de l'ordre de 0,01 g/l d'effluent épuré (i.e. 0,01 g/l ± 0,005 g/l). A noter que, dans la solution aqueuse à traiter, le perchlorate d'ammonium se présente sous forme dissoute i.e. sous forme d'ions perchlorates (ClO₄⁻) et d'ions ammonium (NH₄⁺). Typiquement, la concentration en ions NH₄⁺ dans l'effluent épuré obtenu à l'issue du traitement selon l'invention est inférieure à 50 mg/l d'effluent épuré, notamment inférieure à 40 mg/l d'effluent épuré, en particulier inférieure à 30 mg/l d'effluent épuré et, plus particulièrement, de l'ordre de 20 mg/l d'effluent épuré (i.e. 20 mg/l ± 5 mg/l).

De plus, la masse des ions nitrates dans cet effluent représente moins de 5%, moins de 3%, moins de 2%, moins de 1%, moins de 0,5%, moins de 0,1% de la masse des ions nitrates initialement contenus dans la solution aqueuse à traiter. Par ailleurs, la concentration en azote total dans l'effluent épuré obtenu à l'issue du traitement selon l'invention est inférieure à 80 mg/l d'effluent épuré, notamment inférieure à 60 mg/l d'effluent épuré, en particulier inférieure à 40 mg/l d'effluent épuré et, plus particulièrement, de l'ordre de 30 mg/l d'effluent épuré (i.e. 30 mg/l ± 5 mg/l).

La concentration en MES dans l'effluent épuré obtenu à l'issue du traitement selon l'invention est inférieure à 200 mg/l d'effluent épuré, notamment inférieure à 180 mg/l d'effluent épuré, en particulier inférieure à 150 mg/l d'effluent épuré et, plus particulièrement, de l'ordre de 100 mg/l d'effluent épuré (i.e. 100 mg/l ± 10 mg/l).

De même, la concentration en DCO dans cet effluent est inférieure à 400 mg/l d'effluent épuré, notamment inférieure à 370 mg/l d'effluent épuré, en particulier inférieure à 340 mg/l d'effluent épuré et, plus particulièrement, de l'ordre de 300 mg/l d'effluent épuré (i.e. 300 mg/l ± 30 mg/l).

En effet, les inventeurs ont montré qu'en utilisant, d'une part, les étapes principales du procédé de traitement tel que décrit dans la demande de brevet FR 2 931 814 et, d'autre part, une filtration membranaire à la fois sur le réacteur de traitement du perchlorate et sur le réacteur d'abattement de la DCO en mettant en commun la filtration membranaire du réacteur de traitement du perchlorate avec le réacteur d'abattement de la DCO, il est possible d'obtenir un effluent de rejet conforme aux exigences législatives et normatives et donc totalement respectueux de l'environnement.

L'utilisation d'une filtration membranaire mise en commun i.e. mutualisée sur deux réacteurs du procédé de traitement selon l'invention permet de retenir les MES en sortie du réacteur d'abattement de la DCO. Cette utilisation permet donc de s'affranchir du réacteur d'abattement en MES des procédés de l'art antérieur tels que des décanteurs lamellaires et donc de s'affranchir des problèmes liés à leur utilisation. Comme déjà évoqué, de tels réacteurs d'abattement en MES doivent être régulièrement entretenus pour éviter leur encrassement et ne permettent pas d'assurer une conservation des micro-organismes présents notamment lorsque ces derniers décantent peu même en présence de floculant.

De plus, le fait de mettre en oeuvre une filtration membranaire en sortie du réacteur d'abattement de la DCO permet de retenir les micro-organismes assurant cet abattement. A l'issue de cette seconde filtration membranaire, le retentat riche en micro-organismes peut être recyclé, en tout ou partie, dans le réacteur d'abattement de la DCO d'origine. Ceci évite la perte en microbiologie observée dans les procédés de l'art antérieur puisque les micro-organismes demeurent suffisamment présents, dans le réacteur d'abattement de la DCO, pour dégrader la DCO résiduelle.

A noter cependant qu'il n'était pas évident de choisir, pour résoudre les problèmes des procédés de traitement de l'art antérieur, une filtration membranaire puisque cette technologie, comme toutes les technologies de filtration forcée, présente l'inconvénient d'être énergivore et donc peu privilégiée dans le traitement de l'eau.

Ainsi, la présente invention concerne un procédé pour traiter une solution aqueuse contenant du perchlorate d'ammonium et éventuellement des ions nitrates, ledit procédé présentant une séquence de nitrification/dénitrification puis une étape de réduction des perchlorates, l'effluent liquide obtenu à l'issue de cette étape de réduction des perchlorates étant soumis à une première filtration membranaire,
le perméat obtenu suite à cette première filtration membranaire étant mis en contact, dans un réacteur en conditions aérobies, avec des micro-organismes aptes à réaliser l'oxydation des matières organiques,
puis l'effluent liquide sortant de ce réacteur étant soumis à une seconde filtration membranaire,
la première filtration membranaire et la seconde filtration membranaire étant réalisées sur une même unité de filtration membranaire qui est un dispositif à l'extérieur des différents bioréacteurs.

Le procédé selon la présente invention vise à traiter les solutions aqueuses issues du broyage sous eau des déchets à base de propergols composites solides dont l'oxydant comprend ou est constitué de perchlorate d'ammonium. De telles solutions sont usuellement appelées « saumure ». Toutefois, de façon plus générale, le procédé selon la présente invention s'applique au traitement de toute solution aqueuse résiduaire contenant du perchlorate d'ammonium et éventuellement des ions nitrates.

En effet, le procédé selon la présente invention permet de traiter des solutions aqueuses contenant de grandes quantités de perchlorate d'ammonium, y compris des solutions saturées avec un excès de perchlorate d'ammonium non dissout, éventuellement en présence de nitrates. Les solutions aqueuses concernées peuvent notamment contenir jusqu'à 100 g/l de perchlorate d'ammonium avec éventuellement jusqu'à 100 g/l de nitrates.

En se référant à la Figure 1 et au bloc « stockage » de cette dernière, la solution aqueuse à traiter peut être, préalablement à la mise en oeuvre du procédé selon l'invention, soumise à un stockage. Ce dernier typiquement réalisé dans un bassin de stockage a pour vocation d'assurer, d'une part, une alimentation continue de la série de réacteurs mis en oeuvre dans le procédé de traitement et, d'autre part, un rôle tampon quant à la composition des solutions aqueuses à traiter.

Le bloc « Traitement Ammonium et Nitrates » de la Figure 1 correspond à la séquence de nitrification/dénitrification que présente le procédé de traitement selon l'invention. Comme précédemment évoqué, cette séquence est comparable à la séquence de nitrification/dénitrification décrite dans la demande de brevet FR 2 931 814.

Par conséquent, cette séquence comprend au moins une étape de nitrification en conditions aérobies, avec des bactéries nitrifiantes en présence d'un substrat carboné minéral, avantageusement du dioxyde de carbone, et d'éléments nutritionnels suivie d'au moins une étape de dénitrification, en conditions anaérobies ou anoxiques, avec des bactéries dénitrifiantes en présence d'un substrat carboné organique, avantageusement du méthanol ou de l'acide acétique, et d'éléments nutritionnels. A titre d'exemples d'éléments nutritionnels utilisés lors de la nitrification et/ou lors de la dénitrification, on peut citer le fer, le calcium, le potassium, le magnésium et le phosphate. Il est possible que la séquence de nitrification/dénitrification du procédé selon l'invention présente plusieurs étapes de nitrification mises en oeuvre dans des réacteurs différents et/ou plusieurs étapes de dénitrification mises en oeuvre dans des réacteurs différents.

Les bactéries nitrifiantes utilisées lors de l'étape de nitrification sont capables d'assurer la nitrification des ions ammoniums en ions nitrites et nitrates. Ces bactéries appartiennent par exemple aux genres *Nitrosococcus, Nitrosospira, Nitrosomonas* et *Nitrobacter.* Les bactéries dénitrifiantes utilisées lors de l'étape de dénitrification sont capables d'assurer la dénitrification des ions nitrates et nitrites en azote moléculaire. Ces bactéries appartiennent par exemple aux genres *Pseudomonas, Micrococcus, Denitrobacillus, Spirillum* et *Achromobacter.* Les bactéries nitrifiantes et dénitrifiantes précédemment citées sont usuellement présentes dans les boues activées des stations d'épuration d'eaux résiduaires urbaines et les boues sédimentaires.

Typiquement, l'étape de nitrification est réalisée dans un réacteur en conditions aérobies c'est-à-dire un réacteur dans lequel la concentration minimale en oxygène moléculaire dissous est supérieure à 2 mg/l. Ce réacteur peut être ensemencé (i) par des bactéries nitrifiantes notamment telles que précédemment définies, obtenues à partir de souches de cultures, (ii) par des bactéries nitrifiantes présentes dans une boue activée connue par l'homme du métier comme contenant de telles bactéries ou (iii) par un de leurs mélanges.

L'étape de dénitrification est réalisée dans un réacteur en conditions anaérobies (absence d'air) ou anoxiques (manque d'oxygène) c'est-à-dire un réacteur dans lequel la concentration maximale en oxygène moléculaire dissous est inférieure à 1 mg/l. Ce réacteur peut être ensemencé (i) par des bactéries dénitrifiantes notamment telles que précédemment définies, obtenues à partir de souches de cultures, (ii) par des bactéries dénitrifiantes présentes dans une boue activée connue par l'homme du métier comme contenant de telles bactéries ou (iii) par un de leur mélange. Le réacteur dans lequel est réalisée l'étape de nitrification et celui dans lequel est réalisée l'étape de dénitrification sont montés en série.

La séquence de nitrification/dénitrification peut également être mise en oeuvre dans un seul réacteur à fonctions alternées de nitrification/dénitrification, en conditions aérobie puis anaérobie, pour, respectivement, la nitrification puis la dénitrification. Dans cette alternative, le réacteur est ensemencé par un mélange de bactéries nitrifiantes et de bactéries dénitrifiantes telles que précédemment définies provenant de souches de cultures et/ou de boues activées.

Si nécessaire, l'homme du métier pourra trouver des informations complémentaires quant à la séquence de nitrification/dénitrification dans la demande de brevet FR 2 931 814.

Typiquement la séquence de nitrification/dénitrification est un procédé cyclique, alors que l'étape de réduction des perchlorates doit être continue. Ainsi, il peut être nécessaire de stocker l'effluent liquide obtenu à l'issue de la séquence de nitrification/dénitrification avant de pouvoir le soumettre, en continu, à l'étape de réduction des perchlorates. Pour ce faire, une cuve tampon est présente entre le ou les réacteur(s) de nitrification/dénitrification et le réacteur à fonction de réduction des perchlorates. Cette cuve correspond au bloc « Bassin tampon « demod » » sur la Figure 1 avec « demod » pour démodulation.

Le bloc « Traitement perchlorate » sur la Figure 1 correspond à l'étape de réduction des perchlorates que présente le procédé de traitement selon l'invention. Comme précédemment évoqué, cette étape est comparable à l'étape de réduction des perchlorates décrite dans la demande de brevet FR 2 931 814.

Ainsi, l'étape de réduction des perchlorates est mise en oeuvre en conditions anaérobies ou anoxiques, généralement au sein d'un unique réacteur. Ce dernier est ensemencé avec des bactéries pouvant notamment être des bactéries de l'art antérieur, connues comme bactéries réductrices des ions perchlorates, telles que décrites dans la demande de brevet FR 2 931814. Avantageusement, ces bactéries appartiennent aux espèces *Exiguobacterium mexicanum, Bacillus cereus, Staphylococcus warneri* et/ou *Staphylococcus pasteuri.* En particulier, les espèces de bactéries *Exiguobacterium mexicanum* et/ou *Bacillus cereus* sont utilisées pour l'étape de réduction des perchlorates et, plus particulièrement, l'espèce de bactéries *Exiguobacterium mexicanum.* Le réacteur peut être ensemencé (i) par de telles bactéries, obtenues à partir de souches de cultures, (ii) par de telles bactéries présentes dans une boue activée connue par l'homme du métier ou (iii) par un de leurs mélanges. En fonction de la nature et de l'origine de la boue activée mise en oeuvre, une phase de spécialisation ou d'acclimatation à la réduction des ions perchlorates des bactéries renfermées dans la boue activée utilisée dans le réacteur à fonction de réduction des ions perchlorates peut être nécessaire, comme décrit dans la demande de brevet FR 2 931814. L'étape de réduction des perchlorates est généralement mise en oeuvre en présence d'un substrat carboné organique comme du méthanol ou de l'acide acétique et d'éléments nutritionnels comme le fer, le calcium, le potassium, le magnésium et le phosphate.

Si nécessaire, l'homme du métier pourra trouver des informations complémentaires quant à l'étape de réduction des perchlorates dans la demande de brevet FR 2 931 814.

L'effluent liquide obtenu à l'issue de l'étape de réduction des perchlorates dans le procédé de traitement selon l'invention est soumis à une première filtration membranaire. En d'autres termes, l'effluent liquide sortant du réacteur à fonction de réduction des ions perchlorates est acheminé et notamment pompé vers une unité de filtration membranaire. Cette étape correspond dans la Figure 1 au bloc « Filtration.

En effet, dans le cadre du procédé selon l'invention, l'unité de filtration membranaire est un dispositif à l'extérieur des différents bioréacteurs. Le procédé selon l'invention met donc en oeuvre des bioréacteurs à membrane à boucle externe qui se distinguent des bioréacteurs à membranes immergées qui contiennent, dans leur volume, ces membranes. Le fait d'utiliser des bioréacteurs à membrane à boucle externe est une condition *sine qua non* pour obtenir une mutualisation de l'unité de filtration entre deux bioréacteurs différents.

Typiquement, l'unité de filtration membranaire mise en oeuvre à l'issue de l'étape de réduction des perchlorates comprend au moins une membrane de filtration et une cuve de perméat. Cette membrane de filtration est typiquement poreuse et peut être une membrane de microfiltration ou une membrane d'ultrafiltration. Une membrane de microfiltration présente usuellement une taille de pores comprise entre 0,1 et 3 µm et notamment une taille de pores comprise entre 0,1 et 1 µm. Une membrane d'ultrafiltration présente usuellement une taille de pores comprise entre 0,001 et 0,1 µm. Une membrane de microfiltration retient généralement des particules de taille significative et des graisses, alors qu'une membrane d'ultrafiltration retient, en outre, des composés sous forme colloïdale comme des protéines. Les membranes de microfiltration ou d'ultrafiltration utilisables dans le cadre de la présente invention peuvent être en céramique ou en polymère comme un polymère synthétique. Par exemple, elles peuvent être en un matériau choisi dans le groupe constitué par du carbure de silicate, du graphène, du polyacrylonitrile, du polyéthylène, du polyéthylsulfone, du polysulfone, du polytétrafluoroéthylène et du difluorure de polyvinylidine.

Dans un premier mode de réalisation, l'unité de filtration membranaire mise en oeuvre à l'issue de l'étape de réduction des perchlorates comprend une membrane de microfiltration. Cette membrane de microfiltration peut être une membrane à feuille plate ou une membrane à fibres creuses. Avantageusement, la membrane de microfiltration mise en oeuvre dans le cadre de la présente invention est une membrane à fibres creuses.

Dans un second mode de réalisation, l'unité de filtration membranaire mise en oeuvre à l'issue de l'étape de réduction des perchlorates comprend une membrane d'ultrafiltration. Cette membrane d'ultrafiltration peut être une membrane à feuille plate ou une membrane à fibres creuses. Avantageusement, la membrane d'ultrafiltration mise en oeuvre dans le cadre de la présente invention est une membrane à fibres creuses.

La filtration membranaire mise en oeuvre à l'issue de l'étape de réduction des perchlorates peut être une filtration interne/externe de type tangentiel. Avantageusement, la filtration membranaire mise en oeuvre à l'issue de l'étape de réduction des perchlorates est conduite en imposant un gradient de pression. En particulier, les traitements de filtration avec membrane de microfiltration ou membrane d'ultrafiltration impliquent une différence de pression entre les deux faces de la membrane, inférieure à 0,5 MPa et notamment comprise entre 0,02 MPa et 0,2 MPa.

A l'issue de cette première étape de filtration membranaire, un retentat (ou concentrat) et un perméat (ou filtrat) sont obtenus. Le perméat correspond à l'effluent liquide obtenu qui est acheminé vers le réacteur dans lequel l'abattement de la DCO est réalisé. Le retentat comprend notamment des bactéries initialement présentes dans le réacteur à fonction de réduction des perchlorates. Il est donc possible d'utiliser des techniques connues de lavage à contre-courant pour nettoyer la ou les membrane(s) et recycler les bactéries ainsi récupérées vers le réacteur à fonction de réduction des perchlorates.

De façon pratique, l'unité de filtration mise en oeuvre avec au moins une membrane de filtration telle que précédemment définie comprend une entrée pour l'effluent à filtrer dans laquelle passe un conduit pour transporter l'effluent à filtrer provenant du récipient à fonction de réduction des perchlorates. Elle comprend également, au niveau de la cuve de perméat, une sortie d'effluent dans laquelle passe un conduit pour transporter le perméat vers le réacteur à fonction d'abattement de la DCO. Elle comprend enfin une sortie pour le retentat reliée à un conduit de recirculation vers le récipient à fonction de réduction des perchlorates. La cuve de perméat présente également une sortie d'effluent dans laquelle passe un conduit pour vider la fin de cuve et la transporter en tête de station dans le bassin de stockage et/ou dans le réacteur à fonction de nitrification et/ou de dénitrification et ce, pour éviter une contamination, dans la cuve de perméat, du perméat obtenu à l'issue de la seconde étape de filtration membranaire par du perméat obtenu à l'issue de la première étape de filtration membranaire résiduel.

Le bloc « Abattement DCO » sur la Figure 1 correspond à l'étape durant laquelle la matière organique contenue dans le perméat issu de la première filtration membranaire est dégradée, de façon biologique, par des micro-organismes épurateurs i.e. des micro-organismes aptes à réaliser l'oxydation des matières organiques, comme des bactéries. Cette étape est une étape classique du traitement des eaux usées durant laquelle la biomasse bactérienne consomme, par le biais de réactions biochimiques, le carbone organique biodégradable, contenu dans les eaux à traiter.

Ainsi, l'étape d'abattement de la DCO est mise en oeuvre en conditions aérobies, généralement au sein d'un unique réacteur, notamment un unique réacteur ouvert. Il est toutefois possible d'apporter de l'oxygène dans ce réacteur afin de favoriser les réactions biochimiques d'oxydation. Pour ce faire, le réacteur à fonction d'abattement de la DCO présente des moyens d'injection d'air. Il peut également présenter des moyens d'agitation pour que la mise en contact entre l'effluent à traiter et les micro-organismes aptes à réaliser l'oxydation des matières organiques se fasse sous agitation et ce, pour faciliter le mélange entre l'effluent à traiter i.e. le perméat issu de la première filtration membranaire et les micro-organismes épurateurs et une bonne aération du mélange.

Typiquement, le réacteur à fonction d'abattement de la DCO est ensemencé avec des micro-organismes comme des bactéries de l'art antérieur, connues comme bactéries aptes à réaliser l'oxydation des matières organiques. Avantageusement, ces bactéries appartiennent aux genres *Bacillus, Achromobacter, Flavobacterium* et *Pseudomonas.* Le réacteur peut être ensemencé (i) par de telles bactéries, obtenues à partir de souches de cultures, (ii) par de telles bactéries présentes dans une boue activée connue par l'homme du métier pour réaliser l'oxydation des matières organiques ou (iii) par un de leurs mélanges.

On peut éventuellement ajouter des éléments nutritionnels nécessaires au développement des micro-organismes du type bactéries présentes dans le réacteur à fonction d'abattement de la DCO. Ces éléments nutritionnels sont notamment choisis parmi les oligo-éléments comme le fer, le calcium, le potassium, le magnésium et le phosphate. Ces éléments peuvent être ajoutés dans le réacteur aérobie ou dans le perméat issu de la première étape de filtration membranaire avant son entrée dans le réacteur. En variante, cet ajout d'éléments et notamment d'oligo-éléments peut ne pas être nécessaire.

La durée de l'étape d'abattement de la DCO est déterminée par le temps nécessaire à l'obtention d'une teneur en DCO compatible avec les normes de rejet en vigueur. Elle est fonction du débit d'entrée de l'effluent à traiter, de sa concentration en matières organiques et du volume du réacteur aérobie utilisé. Typiquement cette durée est comprise entre 30 min et 3 h.

L'effluent liquide obtenu à l'issue de l'étape d'abattement de la DCO dans le procédé de traitement selon l'invention est soumis à une filtration membranaire qui correspond à la seconde étape de filtration membranaire dans le cadre de ce procédé. En d'autres termes, l'effluent liquide sortant du réacteur à fonction d'abattement de la DCO est acheminé et notamment pompé vers l'unité de filtration également utilisée pour la première étape de filtration membranaire.

Comme précédemment décrit, le perméat obtenu à l'issue de cette seconde étape de filtration membranaire est, du fait de sa composition satisfaisant aux normes de rejet, un effluent apte à être rejeté en milieu naturel. Par conséquent, le perméat obtenu à l'issue de la seconde étape de filtration membranaire est rejeté en milieu naturel.

En vue de la seconde étape de filtration membranaire, l'unité de filtration comprend une entrée pour l'effluent à filtrer dans laquelle passe un conduit pour transporter l'effluent à filtrer provenant du récipient à fonction d'abattement de la DCO. Elle comprend également une sortie d'effluent dans laquelle passe un conduit pour permettre le rejet du perméat vers le milieu naturel. Elle comprend enfin une sortie pour le retentat reliée à un conduit de recirculation vers le récipient à fonction d'abattement de la DCO.

Dans le procédé selon l'invention, la première étape de filtration membranaire et la seconde étape de filtration membranaire sont réalisées en utilisant la même unité de filtration membranaire comme illustré sur la Figure 1.

Ainsi, les différents conduits présents au niveau de l'unité de filtration et permettant l'alimentation en effluent provenant du récipient à fonction de réduction des perchlorates, l'alimentation en perméat du récipient à fonction d'abattement de la DCO, l'alimentation en effluent provenant du récipient à fonction d'abattement de la DCO et le rejet du perméat en milieu naturel sont dotés de vannes dont l'ouverture et la fermeture sont contrôlées pour permettre une utilisation séquentielle de cette unité pour la première et la seconde filtrations membranaires.

### Exemple de traitement selon l'invention d'une solution aqueuse contenant à la fois du perchlorate d'ammonium et des ions nitrates selon le procédé de la présente invention.

L'installation mise en oeuvre pour ce traitement comprend :
- un bassin de stockage (BT) dans lequel est disposée et éventuellement conservée une solution aqueuse contenant à la fois du perchlorate d'ammonium et des ions nitrates avant mise en oeuvre du procédé selon l'invention ;
- un bassin de traitement ammonium/nitrates de 150 m³ dans lequel la nitrification et la dénitrification sont réalisées en alternant des phases d'aérobie (nitrification) et d'anoxie (dénitrification) ;
- une cuve de démodulation de 5 m³ dans laquelle est disposé l'effluent liquide obtenu à l'issue de la séquence de nitrification/dénitrification réalisée dans le bassin de traitement ammonium/nitrates ;
- un bassin de traitement des perchlorates de 150 m³ dans lequel l'étape de réduction des ions perchlorates est réalisée ;
- un bassin d'abattement de la DCO de 12 m³ dans lequel l'étape d'oxydation des matières organiques est réalisée ; et
- une unité de filtration comprenant une membrane d'ultrafiltration de marque ORELIS composée d'un carter de 99 membranes et 33 canaux d'un débit surfacique égal à 25 l/h/m² et une cuve pour perméat de 1 m³.

Le bassin de stockage BT, le bassin de traitement ammonium/nitrates, la cuve de démodulation, le bassin de traitement des perchlorates, l'unité de filtration et le bassin d'abattement de la DCO sont montés en série. Lesdits bassins et cuves comportent des moyens d'agitation, de contrôle du pH, d'injection d'air (activés ou non), des moyens pour l'alimentation en, et la sortie de, l'effluent, ainsi que des moyens pour l'introduction des composés additionnels.

Le bassin de traitement ammonium/nitrates contient à la fois une boue activée acclimatée nitrifiante et une boue acclimatée dénitrifiante. Lorsque ce bassin fonctionne en conditions aérobies (nitrification), le système d'injection d'air qu'il présente est opérationnel permettant une alimentation, en air à un débit de 6-7 kg O₂/h. Lorsque le bassin de traitement ammonium/nitrates fonctionne en conditions anoxiques (dénitrification), l'aération est stoppée et seule l'agitation est conservée pendant le temps imparti avec un suivi complémentaire du signal redox de la cuve. Le bassin de traitement ammonium/nitrates est également alimenté en oligo-éléments (entre 50 et 90 l/jour selon la concentration en perchlorate de l'effluent en entrée), en méthanol (jusqu'à 50 I/j, valeur ajustée selon les mesures quotidiennes dans le bassin) et en soude pour la régulation du pH.

Le bassin de traitement des perchlorates contient une boue réductrice des ions perchlorates, c'est-à-dire une boue ayant été spécialisée et acclimatée. Il est alimenté en méthanol (30 à 50 l/j).

Le bassin d'abattement de la DCO contient une boue oxydant les matières organiques, c'est-à-dire une boue ayant été spécialisée et acclimatée.

Conformément au procédé selon l'invention, on introduit, dans le bassin de traitement ammonium/nitrates, une solution aqueuse contenant 10 g/l de perchlorate d'ammonium et 4 g/l de nitrates initialement contenue dans le bassin de stockage BT. La solution aqueuse est mélangée à la boue activée, par agitation. La température est maintenue supérieure à 15°C. L'effluent liquide sortant du bassin de traitement ammonium/nitrates ne contient plus d'ammonium (<1%) et pratiquement plus de nitrates et de nitrites (<1%). Il est injecté dans la cuve de démodulation par surverse au débit d'alimentation puis de la cuve de démodulation au bassin de traitement des perchlorates par surverse au débit d'alimentation.

Dans le bassin de traitement des perchlorates, l'effluent liquide sortant de la cuve de démodulation est mélangé à la boue activée spécialisée et acclimatée pour la réduction des ions perchlorates, par agitation. La température est maintenue supérieure à 15°C.

L'effluent sortant du bassin de traitement des perchlorates est ensuite filtré à l'aide de l'unité de filtration membranaire à membrane d'ultrafiltration. Le rétentat récupéré est recyclé dans ledit bassin de traitement des perchlorates. Le perméat issu de cette ultrafiltration est un effluent épuré des ammoniums, des nitrates, des nitrites et des perchlorates, il est récupéré dans une cuve de perméat.

Ce perméat est injecté dans le bassin d'abattement de la DCO via la cuve de perméat par surverse au débit d'alimentation. Il est ensuite mélangé à la boue activée spécialisée et acclimatée pour la l'oxydation des matières organiques, par agitation.

L'effluent sortant du bassin d'abattement de la DCO est ensuite filtré à l'aide de l'unité de filtration membranaire à membrane d'ultrafiltration déjà mise en oeuvre pour l'effluent sortant du bassin de traitement des perchlorates. Le rétentat récupéré est recyclé dans ledit bassin d'abattement de la DCO.

En suivant ce procédé, les concentrations en ammonium, nitrate/nitrite, perchlorate dans le perméat obtenu à l'issue de la seconde étape de filtration membranaire et recueilli dans la cuve de perméat sont inférieures à 1% en masse. Ce perméat est également conforme en termes d'abattement DCO et en MES et est donc rejetable en milieu naturel.

Le Tableau 1 ci-après présente un premier cycle de traitement selon la présente invention avec un débit station fixé à 8 m³/j.

**Tableau 1**

| | 0-2h | 2-7h | 7-10h | 10-11h | 11-13h | 13-18h | 18-21h | 21-22h | 22-24h |
|---|---|---|---|---|---|---|---|---|---|
| Alimentation Bassin Traitement Ammonium et Nitrates | x | | | | x | | | | |
| Nitrification | x | x | | | x | x | | | |
| Dénitrification | | x | x | | | x | x | | |
| Décantation | | | | x | | | | x | |
| Alimentation cuve démodulatrice + purge Boues | | | | | x | | | | X |
| Alimentation Traitement Perchlorate | x | x | x | x | x | x | x | x | X |
| Filtration membranaire sur Traitement perchlorate et Alimentation Abattement DCO | x | x | | | x | x | | | |
| Filtration membranaire sur Abattement DCO + Rejet | | | x | x | x | | x | x | X |

Pour le cycle de filtration du Tableau 1, le débit station i.e. le débit auquel le perméat obtenu suite à la seconde étape de filtration est rejeté en milieu naturel est égal à 8 m³/jour. Pour ce faire, le débit moyen d'alimentation entre BT et le bassin de traitement ammonium/nitrates est de 2,80 m³/h, le débit moyen d'alimentation entre le bassin de traitement ammonium/nitrates et la cuve de démodulation de 16,50 m³/h, le débit moyen d'alimentation entre la cuve de démodulation et le bassin de traitement des perchlorates de 0,34 m³/h, le débit moyen d'alimentation entre la cuve de perméat suite à la première étape de filtration et le bassin d'abattement de la DCO de 0,58 m³/h et le débit moyen auquel le perméat obtenu suite à la seconde étape de filtration est rejeté en milieu naturel est égal à 1,30 m³/h.

Ainsi, pour un débit station égal à 8 m³/jour, pour permettre le fonctionnement de l'ultrafiltration (UF) sur le bassin de traitement des perchlorates en traitement puis sur le bassin abattement DCO pour le rejet, on a calculé qu'il fallait rejeter ((6x60 min + 2x10 min)/jour) à 1,30 m³/h pour permettre les lavages de l'UF nécessaires.

La démarche identique a été faite pour un débit station visé à 5 m³/jour. Ainsi, le Tableau 2 ci-après présente un deuxième cycle de traitement selon la présente invention avec un débit station fixé à 5 m³/j.

**Tableau 2**

| | 0-2h | 2-5h | 5-7h | 7-10h | 10-11h | 11-13h | 13-16h | 16-18h | 18-21h | 21-22h | 22-24h |
|---|---|---|---|---|---|---|---|---|---|---|---|
| Alimentation Bassin Traitement Ammonium et Nitrates | X | | | | | x | | | | | |
| Nitrification | X | x | x | | | x | x | x | | | |
| Dénitrification | | | x | x | | | | x | x | | |
| Décantation | | | | | x | | | | | x | |
| Alimentation cuve démodulatrice + purge Boues | | | | | | x | | | | | x |
| Alimentation Traitement Perchlorate | X | x | x | x | x | x | x | x | x | x | x |
| Filtration membranaire sur Traitement perchlorate et Alimentation Abattement DCO | X | x | x | | | x | x | x | | | |
| Filtration membranaire sur Abattement DCO + Rejet | | | | x | x | | | | x | x | x |

Dans cette variante de cycle présentée dans le Tableau 2, le débit moyen d'alimentation entre BT et le bassin de traitement ammonium/nitrates est de 1,30 m³/h, le débit moyen d'alimentation entre le bassin de traitement ammonium/nitrates et la cuve de démodulation de 10,50 m³/h, le débit moyen d'alimentation entre la cuve de démodulation et le bassin de traitement des perchlorates de 0,21 m³/h, le débit moyen d'alimentation entre la cuve de perméat suite à la première étape de filtration et le bassin d'abattement de la DCO de 0,58 m³/h et le débit moyen auquel le perméat obtenu suite à la seconde étape de filtration est rejeté en milieu naturel est égal à 1,30 m³/h.

Avec un débit d'alimentation entre la cuve de perméat suite à la première étape de filtration et le bassin d'abattement de la DCO et un débit moyen auquel le perméat obtenu suite à la seconde étape de filtration est rejeté en milieu naturel identiques à ceux du cycle décrit dans le Tableau 1, les temps de rejet sont plus courts - 4x60 min/jour (Tableau 2).

### Calcul de surface de filtration membranaire.

Pour les besoins du traitement des perchlorates, le dimensionnement de l'ultrafiltration se base sur un débit surfacique égal à 25 l/h/m² (filtration en anaérobie).

Pour les besoins de l'abattement de la DCO, le dimensionnement de l'ultrafiltration se base sur un débit surfacique égal à 60 l/h/m² (filtration en aérobie) avec la contrainte du débit moyen de rejet identifié ci-dessus.

Il a donc été choisi de prendre le dimensionnement nécessaire pour l'aérobie et de mutualiser le moyen même en étant au-delà des besoins pour le traitement des perchlorates.

### Protocole détaillé pour éviter un mélange entre les deux filtrations dans la cuve de perméat de l'ultrafiltration.

Une première filtration est réalisée sur le bassin de traitement des ions perchlorates. La cuve vers le bassin d'abattement de la DCO est progressivement remplie via la cuve de perméat d'effluents exempts de perchlorate mais contenant encore la DCO, à débit faible i.e. 0,58 m³/h. La DCO est traitée dans le bassin d'abattement de la DCO au fur et à mesure de son remplissage.

Le remplissage du bassin d'abattement de la DCO est terminé en vidangeant la cuve de perméat; afin d'éviter le mélange des fins de cuve de perméat entre les cycles traitement des perchlorates/abattement de la DCO, cette dernière est complètement vidée en retournant la fin de cuve en tête de station dans le bassin de stockage BT et/ou dans le bassin de traitement ammonium/nitrates.

Lorsque le bassin d'abattement de la DCO est plein, la filtration est mise en route sur ce bassin, la cuve perméat se remplit à nouveau, dans cette étape, avec des effluents exempts de perchlorates, de DCO & de MES, conformes au rejet.

Lorsque la cuve perméat est pleine suite à cette seconde filtration, elle peut être vidangée vers le rejet.

## Revendications

1. Procédé pour traiter une solution aqueuse contenant du perchlorate d'ammonium et éventuellement des ions nitrates, ledit procédé présentant une séquence de nitrification/dénitrification puis une étape de réduction des perchlorates, l'effluent liquide obtenu à l'issue de cette étape de réduction des perchlorates étant soumis à une première filtration membranaire,
**caractérisé en ce que** le perméat obtenu suite à cette première filtration membranaire est mis en contact, dans un réacteur en condition aérobie, avec des micro-organismes aptes à réaliser l'oxydation des matières organiques,
puis **en ce que** l'effluent liquide sortant de ce réacteur est soumis à une seconde filtration membranaire,
la première filtration membranaire et la seconde filtration membranaire étant réalisées sur une même unité de filtration membranaire qui est un dispositif à l'extérieur des différents bioréacteurs.

2. Procédé selon la revendication 1, **caractérisé en ce que** ladite unité de filtration comprend au moins une membrane de filtration et une cuve de perméat.

3. Procédé selon la revendication 2, **caractérisé en ce que** ladite membrane de filtration est une membrane de microfiltration.

4. Procédé selon la revendication 2, **caractérisé en ce que** ladite membrane de filtration est une membrane d'ultrafiltration.

5. Procédé selon l'une quelconque des revendications 1 à 4, **caractérisé en ce que** ladite séquence de nitrification/dénitrification comprend au moins une étape de nitrification en conditions aérobies, avec des bactéries nitrifiantes en présence d'un substrat carboné minéral et d'éléments nutritionnels suivie d'au moins une étape de dénitrification, en conditions anaérobies ou anoxiques, avec des bactéries dénitrifiantes en présence d'un substrat carboné organique et d'éléments nutritionnels.

6. Procédé selon l'une quelconque des revendications 1 à 5, **caractérisé en ce que** ladite étape de réduction des perchlorates met en oeuvre des bactéries choisies dans le groupe constitué par les bactéries appartenant à l'espèce *Exiguobacterium mexicanum,* les bactéries appartenant à l'espèce *Bacillus cereus,* les bactéries appartenant à l'espèce *Staphylococcus warneri,* les bactéries appartenant à l'espèce *Staphylococcus pasteuri* et un de leurs mélanges.

7. Procédé selon l'une quelconque des revendications 1 à 6, **caractérisé en ce que** le perméat obtenu à l'issue de la seconde étape de filtration membranaire est rejeté en milieu naturel.

## Patentansprüche

1. Verfahren zur Behandlung einer wässrigen Lösung, die Ammoniumperchlorat und gegebenenfalls Nitrationen enthält, wobei das Verfahren eine Nitrifikations-/Denitrifikationssequenz und dann einen Schritt zur Reduktion der Perchlorate aufweist, wobei der am Ende dieses Schritts zur Reduktion der Perchlorate erhaltene flüssige Abfluss einer ersten Membranfiltration unterzogen wird,
**dadurch gekennzeichnet, dass** das nach dieser ersten Membranfiltration erhaltene Permeat in einem Reaktor unter aeroben Bedingungen mit Mikroorganismen in Kontakt gebracht wird, die geeignet sind, die Oxidation der organischen Stoffe durchzuführen,
dann dadurch, dass der aus diesem Reaktor austretende flüssige Abfluss einer zweiten Membranfiltration unterzogen wird,
wobei die erste Membranfiltration und die zweite Membranfiltration auf einer einzigen Membranfiltrationseinheit durchgeführt werden, die eine Vorrichtung außerhalb der verschiedenen Bioreaktoren ist.

2. Verfahren nach Anspruch 1, **dadurch gekennzeichnet, dass** die Filtrationseinheit mindestens eine Filtrationsmembran und einen Permeatbehälter umfasst.

3. Verfahren nach Anspruch 2, **dadurch gekennzeichnet, dass** die Filtrationsmembran eine Mikrofiltrationsmembran ist.

4. Verfahren nach Anspruch 2, **dadurch gekennzeichnet, dass** die Filtrationsmembran eine Ultrafiltrationsmembran ist.

5. Verfahren nach einem der Ansprüche 1 bis 4, **dadurch gekennzeichnet, dass** die Nitrifikations-/Denitrifikationssequenz mindestens einen Nitrifikationsschritt unter aeroben Bedingungen mit nitrifizierenden Bakterien bei Vorhandensein von einem mineralischen kohlenstoffhaltigen Substrat und von Nährstoffelementen umfasst, gefolgt von mindestens einem Denitrifikationsschritt unter anaeroben oder anoxischen Bedingungen mit denitrifizierenden Bakterien bei Vorhandensein von einem organischen kohlenstoffhaltigen Substrat und von Nährstoffen.

6. Verfahren nach einem der Ansprüche 1 bis 5, **dadurch gekennzeichnet, dass** bei dem Schritt der Perchloratreduktion Bakterien eingesetzt werden, die aus der Gruppe ausgewählt sind, die aus Bakterien der Spezies *Exiguobacterium mexicanum,* Bakterien der Spezies *Bacillus cereus,* Bakterien der Spezies *Staphylococcus warneri,* Bakterien der Spezies *Staphylococcus pasteuri* und einer ihrer Mischungen besteht.

7. Verfahren nach einem der Ansprüche 1 bis 6, **dadurch gekennzeichnet, dass** das nach der zweiten Stufe der Membranfiltration erhaltene Permeat in die natürliche Umgebung abgeleitet wird.

## Claims

1. Method for treating an aqueous solution containing ammonium perchlorate and optionally nitrate ions, said method having a nitrification/denitrification sequence then a step of reducing perchlorates, the liquid effluent obtained at the end of the step of reducing perchlorates being subjected to a first membrane filtration,
wherein the permeate obtained following the first membrane filtration is put into contact, in a reactor in aerobic conditions, with microorganisms able to carry out the oxidation of organic materials,
then in that the liquid effluent leaving the reactor is subjected to a second membrane filtration,
the first membrane filtration and the second membrane filtration being carried out on a same membrane filtration unit which is a device outside the various bioreactors.

2. Method according to claim 1, wherein said filtration unit comprises at least one filtration membrane and a permeate tank.

3. Method according to claim 2, wherein said filtration membrane is a microfiltration membrane.

4. Method according to claim 2, wherein said filtration membrane is an ultrafiltration membrane.

5. Method according to claim 1, wherein said nitrification/denitrification sequence comprises at least one step of nitrification in aerobic conditions, with nitrifying bacteria in the presence of a mineral carbonaceous substrate and of nutritional elements followed by at least one step of denitrification, in anaerobic or anoxic conditions, with denitrifying bacteria in the presence of an organic carbonaceous substrate and of nutritional elements.

6. Method according to claim 1, wherein step of reducing perchlorates implements bacteria selected from the group consisting of bacteria belonging to the species *Exiguobacterium mexicanum,* bacteria belonging to the species *Bacillus cereus,* bacteria belonging to the species *Staphylococcus warneri,* bacteria belonging to the species *Staphylococcus pasteuri* and one of the mixtures thereof.

7. Method according to claim 1, wherein the permeate obtained at the end of the second step of membrane filtration is discharged into the natural environment.
